# EUROPÄISCHE PATENTSCHRIFT

(11) **EP 3 589 174 B1**
(45) Veröffentlichungstag und Bekanntmachung des Hinweises auf die Patenterteilung: **25.01.2023**
(21) Anmeldenummer: 18720086.0
(22) Anmeldetag: 26.03.2018
(51) Int. Cl.: A47G 29/14, B64F 1/32

(54) **EMPFANGSVORRICHTUNG FÜR PÄCKCHEN ODER PAKETE, DIE ÜBER DEN LUFTWEG AUSGELIEFERT WERDEN**
RECEIVING APPARATUS FOR PACKAGES OR PACKETS DELIVERED BY AIR
DISPOSITIF DE RÉCEPTION DE PETITS PAQUETS OU DE PAQUETS LIVRÉS PAR VOIE AÉRIENNE

(30) Priorität: 30.03.2017 DE 102017106925
(43) Veröffentlichungstag der Anmeldung: 08.01.2020
(73) Patentinhaber: Holzer, Nikolaus, 14193 Berlin (DE)
(72) Erfinder: Holzer, Nikolaus, 14193 Berlin (DE)
(74) Vertreter: Castell, Klaus
(86) Internationale Anmeldenummer: PCT/DE2018/100276
(87) Internationale Veröffentlichungsnummer: WO 2018/177474

(56) Entgegenhaltungen:
- WO-A1-2017/196190
- WO-A1-2018/067327
- US-A1- 2016 159 496
- US-A1- 2017 073 085

## Beschreibung

Die Erfindung betrifft eine Empfangsvorrichtung für Päckchen oder Pakete, die über den Luftweg ausgeliefert werden.

Zur Auslieferung von kleinen Päckchen und Paketen existieren zum Zeitpunkt dieser Anmeldung öffentlich diskutierte Konzepte, Päckchen und Pakete vollautomatisiert über den Luftweg auszuliefern. Diese konzeptionierte Auslieferung soll dabei nicht durch einen Menschen als Paketboten erfolgen, sondern diese Auslieferung erfolgt nach diesen öffentlichen Konzepten vollautomatisiert und aus der Luft. Dabei ist der präzise Auslieferungsort des jeweiligen Päckchens und Pakets nicht mehr ein am Hauseingang installierter Briefkasten oder eine dort installierte Paketbox, sondern eine dafür eingerichtete Vorrichtung, die am Balkon oder am Fenster einer Wohnung installiert wird. Das bedeutet, eine Anfahrt mit einem durch einen Menschen gefahrenes Lieferfahrzeug zu einem Briefkasten oder einer Paketbox am Hauseingang wird dabei durch einen Anflug mit einer Drohne, gelegentlich in der Öffentlichkeit auch "Paketkopter" genannt, ersetzt. Eine solche Drohne kann dabei auch Päckchen oder Pakete in der Höhe ausliefern, auch beispielsweise an eine Empfangsvorrichtung an der Fassade im 22. Stockwerk eines Hochhauses. Diese vollautomatisierte Auslieferung durch eine autonom fliegende und navigierende Drohne ist dabei einer Vielzahl von Missbrauchsgefahren, Diebstahl der Drohne selbst und möglichem Vandalismus ausgesetzt.

Ein weiteres zu lösendes Problem, das auch in der Öffentlichkeit diskutiert wird, ist die für eine Auslieferung notwendige, sehr präzise Navigation im Submeterbereich, um die Drohne nahe an die Empfangsvorrichtung zu navigieren, wo das Päckchen oder das Paket ausgeliefert wird. Bekannte Navigationssysteme basieren auf terrestrischen Peilsendern und auf satellitengestützter Navigation. Theoretisch ist durch eine Satellitennavigation eine extrem präzise Bestimmung der eigenen Koordinaten im Raum möglich. Da aber ein öffentlich zugängliches Navigationssystem mit der erforderlichen Präzision für eine vollautomatisierte Paketauslieferung den nationalen Sicherheitsinteressen der Betreiberstaaten zuwiderläuft, ist es seitens der Betreiberstaaten vorgesehen, dass die Signale der Satellitennavigation künstlich verfälscht oder verzerrt werden, so dass eine willkürlich steuerbare Präzision des öffentlich zugänglichen Navigationssignals vorliegt. Diese willkürliche Signalverfälschung wird in der Fachsprache mit "Selective Availability" bezeichnet. Zwar sei diese künstliche Signalverfälschung zu beginn der 2000er- Jahre abgeschafft worden. Es ist jedoch zu beobachten, dass GPS-Signale gelegentlich starke Fehlweisungen aufweisen, was nicht auf ein ungewolltes Versagen des Satellitennavigationssystems zurückzuführen ist, sondern auf eine bewusste Störung, um in den heute existierenden Kriegsgebieten die Zielführung von automatisierten Waffen, die das gleiche Navigationssystem nutzen, feindliches Feuer nicht zu unterstützen. Um die Präzision der Satellitennavigation von der zuvor genannten "Selective Availability" unabhängig zu machen, sind auch Konzepte bekannt, dass ein Mast mit hochgenau bestimmtem Standort seine eigene Position ständig misst und in seiner Umgebung ein Nachrichtensignal aussendet, in dem mitgeteilt wird, welche Fehlweisung zum augenblicklichen Zeitpunkt vorliegt. Mit diesem als Differenzial-Navigationssystem ist eine theoretische Präzision der Satellitennavigation im Bereich von wenigen cm möglich. Neben der absoluten Navigation ist es auch bekannt, die Annäherung einer Drohne zum Ausliefern von Paketen an die Empfangsvorrichtung zunächst grob über ein bekanntes terrestrisches oder durch ein Satellitennavigationssystem vorzunehmen und im Nahbereich die Annäherung an die Empfangsvorrichtung über einen Peilsender, engl. "Beacon" zu kontrollieren. Bei dem Einsatz von Peilsendern besteht aber eine weitere Missbrauchsgefahr, da der Peilsender nicht von vertrauenswürdigen Betreibern betrieben wird, sondern gegebenenfalls von nichtvertrauenswürdigen Empfängern.

Typische Missbrauchsgefahren sind zum einen das Abfangen von fremden Paketen, die für andere Adressaten bestimmt sind. Ein Täter manipuliert dabei eine eigene Vorrichtung zur Auslieferung, so dass diese einer sich nähernden Drohe vorgibt, Empfangsvorrichtung für eine Vielzahl anderer Empfänger zu sein. Da in Päckchen und Paketen nicht unerhebliche materielle Werte befördert werden, kann durch diesen Missbrauch ein erheblicher Warenwert unterschlagen werden. Es ist also wichtig, dass die vollautomatisierte Drohne, die anders als ein menschlicher Paketbote, der seine Auslieferungsumgebung kennt und gegebenenfalls eine nicht plausible Auslieferung erkennt, sicher zu ihrem Auslieferungsziel geleitet wird.

Eine weitere typische Missbrauchsgefahr ist das Abliefern von unerwünschten Paketen. Anders als bei der Auslieferung von Briefen in einen Briefkasten ermöglicht die Auslieferung von Paketen mit wesentlich größerem Volumen das unerwünschte Abladen von Unrat oder gar von Paketbomben. Die vollautomatisierte Auslieferung ohne menschliche Zwischenschritte, bei denen durch den Menschen also nicht mögliche Verdachtsmomente festgestellt werden können, verfügt also über keine natürliche Überwachungsfunktion. Die Hemmschwelle des Missbrauchs fällt daher für einen möglichen Täter geringer aus.

Noch eine weitere Missbrauchsgefahr ist die Vortäuschung einer falschen Auslieferungsadresse, denn die postalische und polizeilich gemeldete Adresse stimmt durch die Auslieferung an eine Empfangsvorrichtung mit Geokoordinaten nicht mehr mit der bekannten postalischen Adresse des Adressaten überein. Es findet ein Identitätsbruch zwischen postalischer Adresse und Auslieferungsort statt. Zwar ist die exakte Geokoordinate eines Fensters oder eines Balkons als Auslieferungsort, wo sich eine Vorrichtung zur Auslieferung von Päckchen oder Paketen befindet, speziell bei großen Häusern mit einer Vielzahl von Wohneinheiten erheblich präziser als die postalische Adresse. Diese Geokoordinate wird aber in keinem Register festgehalten. Trotz ihrer wesentlich präziseren Ortkoordinate ist der Ort der Auslieferung schon durch die geringste Veränderung der Geokoordinate leichter zu verfälschen als es bei einer postalischen Adresse möglich ist. Ein Täter könnte also mit einer korrekten postalischen Adresse bei einem Bestellvorgang vorgeben, der eigene Nachbar zu sein und als Auslieferungsort seine eigene Empfangsvorrichtung angeben. Ohne nachvollziehbares Register ist es nur erschwert möglich, diesen Missbrauch aufzuklären.

Schließlich kann die Drohne selbst auch noch Ziel von Vandalismus oder Diebstahl sein. Drohnen sind bewusst gewählt kleine Fluggeräte, die bei der Auslieferung von einem Menschen eingefangen werden könnten. Im einfachsten Fall kann bei der Auslieferung eines Pakets ein Netz, vergleichbar mit einem Netz eines Retiarius-Gladiators, auf die Drohne geworfen werden, wodurch die Drohne unweigerlich abstürzen würde und so dem Diebstahl ausgesetzt ist. Ein solcher Diebstahl ist dann sehr gefährlich, wenn in der Software der Drohnensteuerung gegebenenfalls für auf mehrfache Verwendung vorgehaltene, private kryptografische Schlüssel enthalten sind, die durch Auslesen der Steuerungssoftware kompromittiert werden könnten.

In der öffentlichen Diskussion über die vollautomatisierte Auslieferung aus der Luft mit Zustelldrohnen werden eine Vielzahl von theoretisch durchführbaren Konzepten vorgeschlagen, die vollautomatisierte Auslieferung missbrauchssicher gegen unerwünschte Auslieferung, gegen das Kapern von Auslieferungen, gegen Drohnen-Vandalismus und Drohnen-Diebstahl zu machen. Auch werden in der öffentlichen Diskussion Konzepte zur präzisen Navigation vorgeschlagen. Des Weiteren werden Konzepte vorgeschlagen, wie ein Päckchen oder ein Paket mit empfindlichen Inhalten über ein vollautomatisiertes System ausgeliefert werden kann. Allen Konzepten gemeinsam ist aber entweder ein Vorschlag, der nicht ins notwendige Detail geht oder aber Konzepte, die einen sehr erheblichen Kapitaleinsatz für den Einsatz von künstlicher Intelligenz und die Navigation unterstützender Systeme erfordern. Auch werden in vielen öffentlich diskutierten Konzepten mechanisierte Systeme vorgeschlagen, welche ein Andockmanöver mit der Drohne zur Auslieferung von Päckchen und Paketen ausführen sollen.

In der deutschen Offenlegungsschrift DE 10 2014 105 583 A1 wird eine Vorrichtung offenbart, die als horizontal verfahrbare Bühne, als vertikal verfahrbare Bühne oder als Scherenmechanismus ausgeführt ist, um ein Paket von einer Drohne entgegen zu nehmen. Dabei ist vorgesehen, dass die Drohne das Päckchen oder das Paket wie bei einem Handschlag übergibt. Ein vollautomatisiertes Auslieferungssystem ist erst dann vom Auslieferer bis zum Empfänger wirtschaftlich zu betreiben, wenn eine Vielzahl von natürlichen Empfängern dazu ausgerüstet ist, eine vollautomatisierte Auslieferung von Päckchen oder Paketen empfangen zu können. Dabei erhöht sich die Wirtschaftlichkeit, je dichter die Adressaten beieinander wohnen. In Hochhaussiedlungen wird ein vollautomatisiertes Auslieferungssystem seine Stärken besser ausspielen können als es beispielsweise in weniger dicht besiedelten Landstrichen der Fall ist. In Hochhaussiedlungen wohnen häufiger potentielle Empfänger mit geringerem Einkommen. Sich eine Vorrichtung zum Empfang einer automatisierten Päckchenauslieferung oder Paketauslieferung zu installieren, die darüber hinaus auch noch ein mechanisch anspruchsvolles Zusammenspiel mit Drohne durchführen muss, wird voraussichtlich an den hohen Kosten einer solchen Empfangsvorrichtung scheitern. Darüber hinaus dürften die Vorrichtungen, die an der Fassade angeordnet sein müssen, mechanisch anspruchsvoll sein, was die Befestigung betrifft. Schon bei einem Auskragen von einem Meter sind die notwendigen Maueranker für eine Vorrichtung, die bei einem Meter Länge ein Päckchen bis zu 3 kg entgegennehmen kann, und damit ein Drehmoment von 30 Nm erzeugt, vergleichsweise hoch. Es wird zu erwarten sein, dass zukünftige vollautomatisierte Auslieferungen von Päckchen oder Paketen durch Drohnen so geschehen, dass dem auszuliefernden Päckchen oder Paketen eine Banderole aus einem einfachen Klettband mit einem ebenso einfachen magnetischen Blechplättchen daran umgelegt wird, wobei die Drohne über eine drachenseilähnliches Schnur mit zwei elektrisch isolierten Seelen darin und einem am Ende vorliegenden Elektromagneten mit dem Päckchen oder Paket verbunden ist. Dabei haftet der Elektromagnet an dem Blechplättchen der Banderole, die das auszuliefernde Päckchen oder Paket umschließt. Unmittelbar vor der Auslieferung wird die Drohne über eine kleine Seilwinde das drachenseilähnliches Band bis auf eine Länge von 2m oder gar mehr verlängern und durch ein automatisiertes Flugmanöver das am dünnen Seil hängende Päckchen oder Paket so in der Luft maneuvrieren und in der Luft zum Stehen bringen, dass das Paket punktgenau durch Lösen des Elektromagneten abgelegt wird. Dieses Ablegemanöver hat damit eine gewisse Ähnlichkeit der Landung einer Marssonde auf der Marsoberfläche mit dem bereits eingesetzten "Luftkran".

Verfängt sich die Drohne oder wird gar von einem Empfänger versucht, in missbräuchlicher Weise die Drohe am Seil zu ziehen, um die Drohne zu kapern, löst die Drohne das dünne Seil im Bereich der Winde und kann so entkommen. Diese Seilauslieferung mit einem gekonnten Flugmanöver erscheint in der heutigen Zeit, in der erste Roboter, wie die von Boston Dynamics, Inc. aus den USA sehr komplexe Laufbewegungen autonom durchführen, im Bereich des greifbaren zu liegen. Durch die hochagile Maneuvrierfähigkeit der zu erwartenden Drohne und die Möglichkeit, das Auslieferungsseil zu opfern, ist zumindest eine erste Hürde der Gefahr des Kaperns der Drohne oder des Drohnen-Vandalismus genommen.

In der deutschen Offenlegungsschrift DE 10 2015 104 052 A1 wird ein Verfahren zum Überbringen einer Sendung durch eine unbemannte Transportvorrichtung offenbart. In dieser Offenlegungsschrift wird die Problematik der notwendigen Präzision der Geokoordinaten der Empfangsvorrichtung erwähnt. Auch wird darin der Einsatz eines Peilstrahls oder eines dort engl. "Pairing" genannten Verfahrens zur Nahfeldnavigation genannt. Schließlich wird auch berichtet, dass Drohne und Empfangsvorrichtung sich durch codierte Kommunikation in Bezug auf eine Berechtigung austauschen. Das Pairing wird in der deutschen Offenlegungsschrift DE 10 2015 104 052 A1 in breiter Form offenbart, wobei jede Art von Signalübermittlung in Frage kommt, wie zum Beispiel sehr verbreitete Signale heutiger WLAN, BlueTooth^{®} und UMTS-Netze. Die sehr kurzen Wellenlängen von typischen WLAN, BlueTooth^{®} und UMTS, die um den Frequenzbereich von 2.400 MHz eine Wellenlänge im Bereich von etwa 10 cm haben, sind aber für eine Nahfeldortung im ebenso präzisen Bereich, zwar vom Prinzip her möglich, aber weniger gut geeignet, weil die Raumauflösung von 10 cm eher zu gering ist.

Konzepte der Fernnavigation und der Nahfeldnavigation, sowie des Austausches von Berechtigungsinformationen gibt es sehr viele, so dass der Fachmann sich die für das jeweilige Konzept passende aussuchen kann. Wenn aber in möglichst kurzer Zeit die vollautomatisierte Auslieferung von Päckchen oder Paketen aus der Luft durch Drohnen einen möglichst großen Zulauf erfahren soll, dann ist es notwendig, die in der deutschen Offenlegungsschrift DE 10 2015 104 052 A1 genannten Konzepte mit geringstmöglicher Mechanisierung, wie mechanische Antriebe in der Empfangsvorrichtung für Päckchen oder Pakete, und geringstmöglicher Konfiguration, wie zum Beispiel Einbinden in ein Computer-Netzwerk oder Einstellen von persönlichen Identitätsinformationen und Geokoordinaten, umzusetzen.

In der US-Patentanmeldung US 2017/073085 A1 wird ein Auslieferungsbehälter für Pakete, die durch Drohnen ausgeliefert werden, offenbart. Dieser Auslieferungsbehälter weist eine sich nach oben in Form eines pyramidalen Dachs sich öffnende Luke auf. Dieser nach oben zu öffnende Auslieferungsbehälter muss für eine funktionierende Nutzung auf einem horizontalen Untergrund aufgestellt werden und ist zur Nutzung an einem Fenster nicht geeignet.

Aufgabe der Erfindung ist es daher, eine Empfangsvorrichtung für Päckchen oder Pakete zur Verfügung zu stellen, die über den Luftweg ausgeliefert werden, mit geringer Mechanisierung und geringem Konfigurationsaufwand eingerichtet und betrieben werden kann.

Die erfindungsgemäße Aufgabe wird dadurch gelöst, dass eine vor Witterung schützende Einhausung, welche eine Öffnung zum Einlegen eines Päckchens oder eines Pakets aufweist, eine optische Signalvorrichtung, die bevorzugt im Infrarotbereich Signale aussendet, und in der Einhausung vor Witterung geschützt angeordnet ist und beim Aussenden von Signalen die Öffnung beleuchtet, eine Vorrichtung zum Empfangen von drahtlos übermittelten Signalen, eine Vorrichtung zum drahtgebundenen, optischen oder drahtlosen Empfang von Autorisierungsinformationen, wie kryptografischen Schlüsseln und von Lieferinformationen, wobei bei einem Anflug durch eine Drohne, diese ein Signal aussendet, über das sich die Drohne zu erkennen gibt und die Vorrichtung zum Empfangen von drahtlos übermittelten Signalen dieses Signal der Drohne empfängt, darauf die optische Signalvorrichtung ein zuvor durch die Vorrichtung zum drahtgebundenen, optischen oder drahtlosen Empfang von Autorisierungsinformationen vereinbartes codiertes Signal aussendet, mit dem sich Empfangsvorrichtung gegenüber der Drohne bemerkbar macht, indem die optische Signalvorrichtung beim Aussenden von Signalen die Öffnung mit dem Signal beleuchtet, wobei die Öffnung von einem mattierten, optisch transparenten Ring umgeben ist, der das Licht der optischen Signalvorrichtung streut. Weitere vorteilhafte Ausgestaltungen sind in den Unteransprüchen zu Anspruch 1 angegeben.

Die Erfindung wird anhand der folgenden Figuren näher erläutert. Es zeigt:
- Fig. 1: eine Drohne in einem Auslieferungsanflug an eine Empfangsvorrichtung für Päckchen oder Pakete mit einem an einem Seil oder Faden hängenden Päckchen,
- Fig. 2: die Drohne und die Empfangsvorrichtung aus Figur 1 kurz nach Auslieferung des Päckchens oder Pakets,
- Fig. 3.1: eine Drohne in einem Auslieferungsanflug an eine Empfangsvorrichtung für Päckchen oder Pakete mit einem an einem gelösten Seil hängenden Päckchen mit einer alternativen Empfangsvorrichtung,
- Fig. 3.2: die Drohne und die Empfangsvorrichtung aus Figur 3.1 unmittelbar nach erfolgter Auslieferung,
- Fig. 4: die Empfangsvorrichtung aus Figur 3 mit einem daran angeschlossenen Sack zur Aufnahme weiterer Päckchen oder Pakete,
- Fig. 5: eine in ein gattungsgemäßes Fenster integrierte Empfangsvorrichtung, die einen QR-Code^{®} aus einer Auftragsbestätigung mit Zustellinformationen liest,
- Fig. 6: eine zur Empfangsvorrichtung in Fig. 5 alternative Empfangsvorrichtung,
- Fig. 7: eine Skizze zur Skizzierung der Erstinitialisierung einer Empfangsvorrichtung.

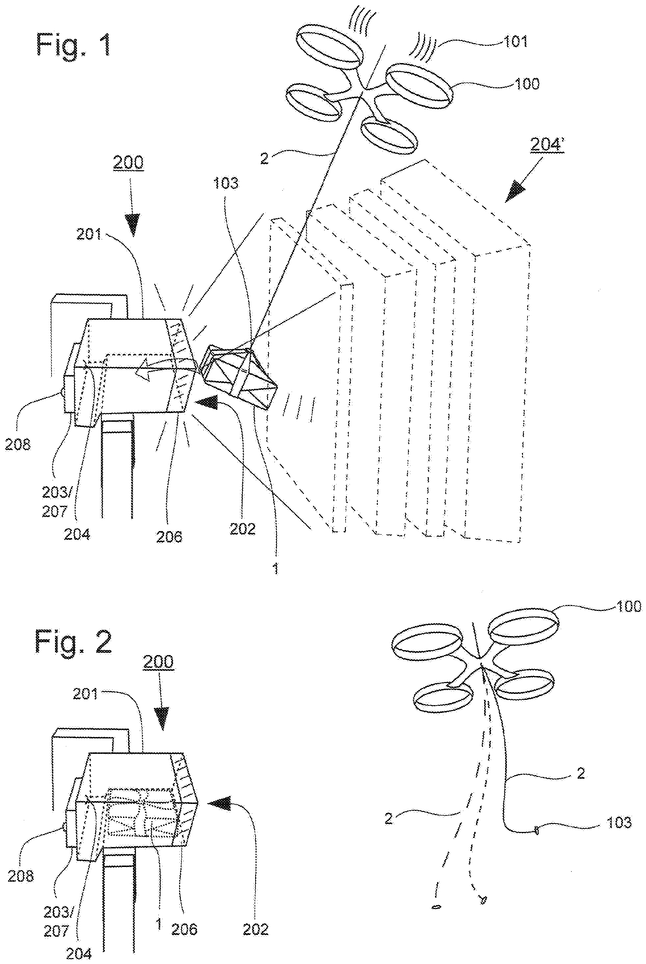

In **Figur 1** ist eine Darstellung einer Auslieferung eines Päckchens 1 durch eine Drohne 100 an eine Empfangsvorrichtung 200 dargestellt. Die erste Variante der Empfangsvorrichtung 200 für Päckchen oder Pakete, die über den Luftweg ausgeliefert werden, weist folgende Elemente auf: zunächst eine vor Witterung schützende Einhausung 201, welche eine Öffnung 202 zum Einlegen eines Päckchens 1 oder eines Pakets aufweist, und des Weiteren eine optische Signalvorrichtung, hier eine Leuchtdiode 204, die bevorzugt im Infrarotbereich Signale aussendet, und in der Einhausung 201 vor Witterung geschützt angeordnet ist und beim Aussenden von Signalen die Öffnung 202 beleuchtet. Es ist auch eine Vorrichtung 207 zum Empfangen von drahtlos übermittelten Signalen vorhanden, wie Autorisierungsinformationen einer sich nähernden Drohne 100. Eine Vorrichtung 208 zum drahtgebundenen, optischen oder drahtlosen Empfang von Autorisierungsinformationen, wie kryptografischen Schlüsseln und von Lieferinformationen, ist vorhanden, um die Empfangsvorrichtung 200 für eine korrespondierende Auslieferung eines Päckchens 1 oder eines Paketes vorzubereiten. Um eine Unabhängigkeit von einer Einbindung in eine Internet-Infrastruktur zu erreichen, kann es vorgesehen sein, dass die Vorrichtung 208 zum drahtgebundenen, optischen oder drahtlosen Empfang von Autorisierungsinformationen ein einfacher Barcode-Leser oder QR-Code^{®}-Leser oder dergleichen ist, mit dem optische Informationen in Form von codierten Zeichen- und Ziffernfolgen übermittelt werden können. Geräte des sogenannten Internet-of-Things (loT) zeichnen sich durch einen Gebrauch aus, der nur selten eine Aktualisierung von Computerprogrammen (Software) ermöglicht. Schwachstellen können so von missbräuchlichen Computervandalen oder von Hackern ausgenutzt werden, um ggf. Informationen für eine nahende Auslieferung abzugreifen. Ein Betrieb der Empfangsvorrichtung 200 ohne Anbindung an das Internet ist so möglich und kann aufgrund der Sicherheit vor Hackerangriffen vorteilhaft sein. Es ist vorgesehen, dass bei einem Anflug durch eine Drohne 100, diese ein Signal aussendet, skizziert durch Wellensymbole 101, über das sich die Drohne 100 einer nahen Empfangsstation 200 zu erkennen gibt und die Vorrichtung 207 zum Empfangen von drahtlos übermittelten Signalen dieses Signal der Drohne 100 empfängt. Darauf sendet die optische Signalvorrichtung, hier Leuchtdiode 204, ein zuvor durch die Vorrichtung 208 zum drahtgebundenen, optischen oder drahtlosen Empfang von Autorisierungsinformationen vereinbartes codiertes Signal 204' aus, mit dem sich Empfangsvorrichtung 200 gegenüber der Drohne 100 bemerkbar macht, indem die optische Signalvorrichtung beim Aussenden von Signalen die Öffnung 202 mit dem Signal 204' beleuchtet.

Die Drohne 100 hat kurz vor der Annäherung an die Empfangsvorrichtung 200 das an einem Seil 2 oder Faden hängende Päckchen 1 durch Betätigen einer innerhalb der Drohne 100 vorliegenden Winde wie an einem Kran um etwa ein bis 2 m herabgelassen und kann sich so, gesichert vor Sabotage und Kaperung, der Empfangsvorrichtung 200 nähern. Durch ein entsprechendes Flugmanöver hat die Drohne 100 das Päckchen 1 zuvor in eine entsprechende Bewegung gebracht, so dass das Päckchen 1 mit geringer Beschleunigung und geringen Kräften durch Auslösen eines Elektromagneten 103 vom Seil 2 gelöst wird und in die offene Einhausung 201 der Empfangsvorrichtung 200 gelangt.

Im Anflug der Drohne 100 sendet diese, wie bereits erwähnt und hier mit den Wellensymbolen 101 dargestellt, einen nutzerindividuellen Identifikationscode aus und einen weiteren einmaligen Code, der mit einem zu einem privaten, kryptografischen Schlüssel korrespondierenden öffentlichen Schlüssel verschlüsselt worden ist. Der einmalige Code dient dazu, dass jedes ausgesendete Signal anders ist und daher von mitlauschenden, missbräuchlichen Empfangsvorrichtungen nicht kopiert werden kann. Der öffentliche kryptografische Schlüssel wurde im Vorfeld der Auslieferung des Päckchens 1 ausgetauscht. Nach Empfang entschlüsselt die Empfangsvorrichtung 200 mit Hilfe eines kleinen Rechners 203 den verschlüsselten nutzerindividuellen Identifikationscode mit einem privaten, kryptografischen Schlüssel. Auch dieser private kryptografische Schlüssel wurde im Vorfeld der Auslieferung des Päckchens 1 ausgetauscht. Wenn der von der Empfangsvorrichtung 200 hier empfangene nutzerindividuelle Identifikationscode mit dem nutzerindividuellen Code übereinstimmt, der zuvor ausgetauscht wurde, dann sendet die Empfangsvorrichtung 200 den nutzerindividuellen Identifikationscode und des weiteren den einmaligen Code, der mit dem öffentlichen, kryptografischen ersten Schlüssel verschlüsselt ist, über eine im Infrarotbereich leuchtenden Leuchtdiode 204 aus. Diese im Infrarotbereich leuchtende Leuchtdiode 204 beleuchtet beim Aussenden des wiederverschlüsselten nutzerindividuellen Identifikationscodes die Einhausung 201 und auch einen die Öffnung 202 der Einhausung 201 säumenden und mattierten, optisch transparenten Ring 206 aus, der das Licht optischen Signalvorrichtung, hier der Infrarot-Leuchtdiode 204 streut. Der die Einhausung 201 säumende und mattierte, optisch transparente Ring 206 oder die Säumung hilft der Drohne 100, sich mit ausreichender Präzision der Empfangsvorrichtung 200 zu nähern. Dabei steuert die Drohne 100 mit Hilfe einer optischen Navigation, in dem sie mit einer hier nicht dargestellten 180°-Kamera nur das Ziel anvisiert, dass die korrekten verschlüsselten Signale aussendet.

In **Figur 2** ist eine Szenerie unmittelbar nach der Auslieferung des Päckchens 1 durch die Drohne 100 dargestellt. Das Päckchen 1 liegt nun, vor Witterung geschützt, in der Empfangsvorrichtung 200, wo es durch den Nutzer herausgenommen werden kann. Die Drohne 100 zieht das Seil 2 oder den Faden mit dem Elektromagneten 103 ein und fliegt für eine weitere Auslieferung zu ihrem Ausgangsort zurück. Um zu vermeiden, dass sich das Seil 2 in den hier nicht ausdrücklich dargestellten Rotoren der Drohne 100 verfängt und damit zum Absturz bringt, kann vorgesehen sein, dass in alternativer Weise der Elektromagnet 103 an der Drohne 100 selbst sitzt und dort das Seil 2 löst. In diesem Fall würde jede Lieferung mit einer Dohne 100 durch ein geopfertes Seilstück oder Fadenstück begleitet sein.

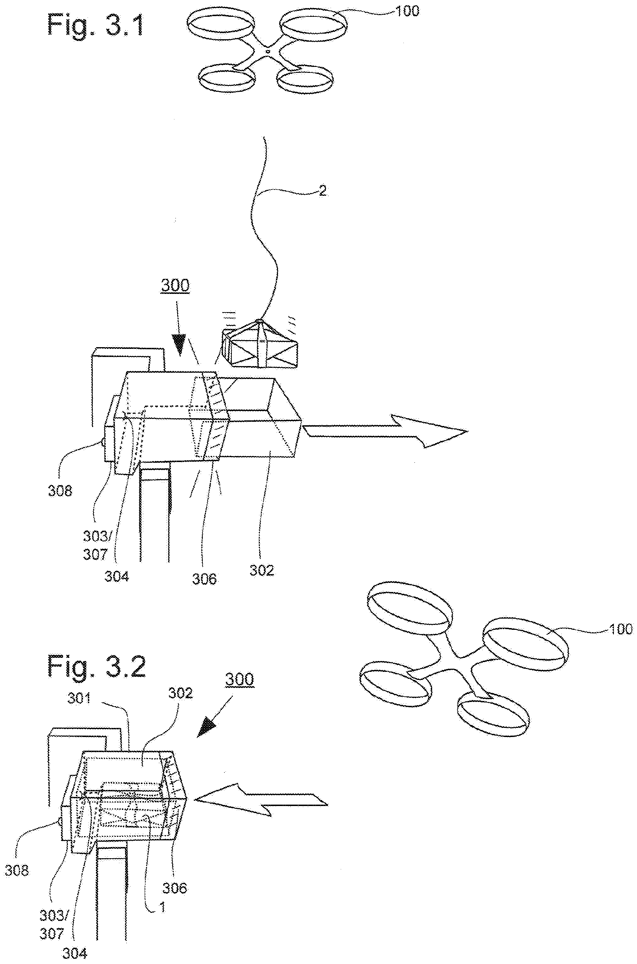

In **Figur 3****.****1** eine Drohne 100 in einem Auslieferungsanflug an eine alternative Empfangsvorrichtung 300 dargestellt. Die alternative Empfangsvorrichtung 300 weist eine verfahrbare Schublade 302 in der vor Witterung schützenden Einhausung 301 auf. Diese Schublade 302 hat im Wesentlichen zwei Funktionen. Zunächst bildet die Schublade 302 im geöffneten, also im ausgefahrenen Zustand eine Art Auffangkorb für ein in der Schublade 302 abzuladendes Päckchen 1. Dadurch, dass die Schublade 302 im ausgefahrenen Zustand nach oben geöffnet ist, ist für eine Drohne 100 das Auslieferungsmanöver einfacher durchzuführen als es in Figur 1 skizziert gewesen ist. Jedoch ähnelt auch in diesem Verfahren zur Auslieferung eines Päckchens 1 die Auslieferung dem Absetzen eines Objekts durch einen sog. "Luftkran", wie dieser bei Mars-Missionen schon erfolgreich eingesetzt worden ist. In dieser hier dargestellten Szene ist vorgesehen, dass die Drohne 100 das Päckchen an einem Seil 2 oder Faden herablässt, um sich selbst bei der Auslieferung vor einer missbräuchlichen Kaperung zu schützen. Damit das Seil 2 oder der Faden unmittelbar nach der Auslieferung sich nicht in den hier nicht ausdrücklich dargestellten Rotoren der Drohne 100 verfängt, ist vorgesehen, dass das Seil 2 oder der Faden mit abgeworfen und bei der Auslieferung geopfert wird, wobei die herunterwehenden Rotorwinde das Seil 2 oder den Faden von den Rotoren der Drohne 100 weg befördern. Sobald das Päckchen 1 ausgeliefert worden ist, was die Drohne 100 der Empfangsvorrichtung 300 signalisieren kann, ist vorgesehen, dass die Empfangsvorrichtung 300 die Schublade 302 wieder schließt. Dadurch ist das Päckchen 1 vor Witterung und vor Regen, der durch Wind in die Öffnung der Empfangsvorrichtung geweht werden könnte, geschützt. Das automatische Einziehen der Schublade 302 kann auch durch entsprechende Sensoren der Empfangsvorrichtung 300 ausgelöst werden. Um jedoch zu vermeiden, dass die Empfangsvorrichtung 300 die Schublade 302 bei einem aus Sicht der Sensorik der Drohne 100 nicht geglückten Auslieferungsversuch vorzeitig schließt, ist vorgesehen, dass die Drohne 100 der Empfangsvorrichtung 300 den Befehl zum Schließen erteilt. Wie die Empfangsvorrichtung 200 in den Figuren Figur 1 und Figur 2 weist auch diese Empfangsstation einen Rechner 303 auf, sowie eine Vorrichtung 307 zum Empfangen von drahtlos übermittelten Signalen und eine Vorrichtung 308 zum drahtgebundenen, optischen oder drahtlosen Empfang von Autorisierungsinformationen.

In **Figur 3****.****2** ist die in Figur 3.1 dargestellte Szene unmittelbar nach der Auslieferung des Päckchens 1 dargestellt. Die Schublade 302 der Empfangsvorrichtung 300 ist geschlossen, wie es durch den Pfeil angedeutet ist, und die Drohne 100 entfernt sich vom Auslieferungsort.

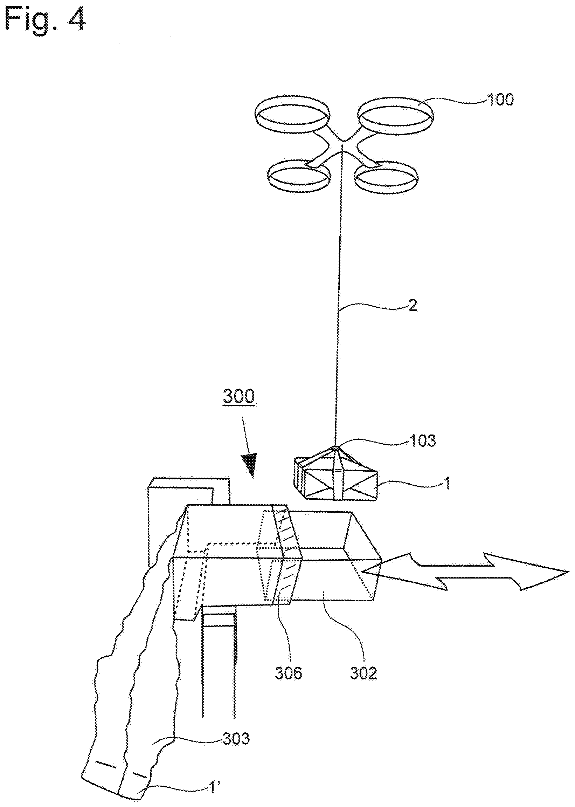

In **Figur 4** ist eine weitere Ausgestaltung der Empfangsvorrichtung 300 aus den Figuren 3.1 und 3.2 dargestellt. Die hier dargestellte Empfangsvorrichtung 300 weist einen zusätzlichen Auffangsack 303 oder eine Vorrichtung zum Aufnehmen weiterer Päckchen auf, wobei die Schublade 302 empfangene Päckchen 1 nach hinten durchschiebt, so dass ein gerade empfangenes Päckchen 1 in den Auffangsack 303 oder in die Vorrichtung zum Aufnehmen weiterer Päckchen befördert wird. Dieser Auffangsack 303 oder die Vorrichtung zum Aufnehmen weiterer Päckchen hat den Vorteil, das bei zufälligen Mehrfachlieferungen in einem engen Zeitfenster die Empfangsvorrichtung 300nicht besetzt ist und daher eine Auslieferung eines weiteren Päckchens nicht stattfinden kann. In Figur 4 ist dargestellt, wie sich bereits ein Päckchen 1' in dem Auffangsack 303 befindet.

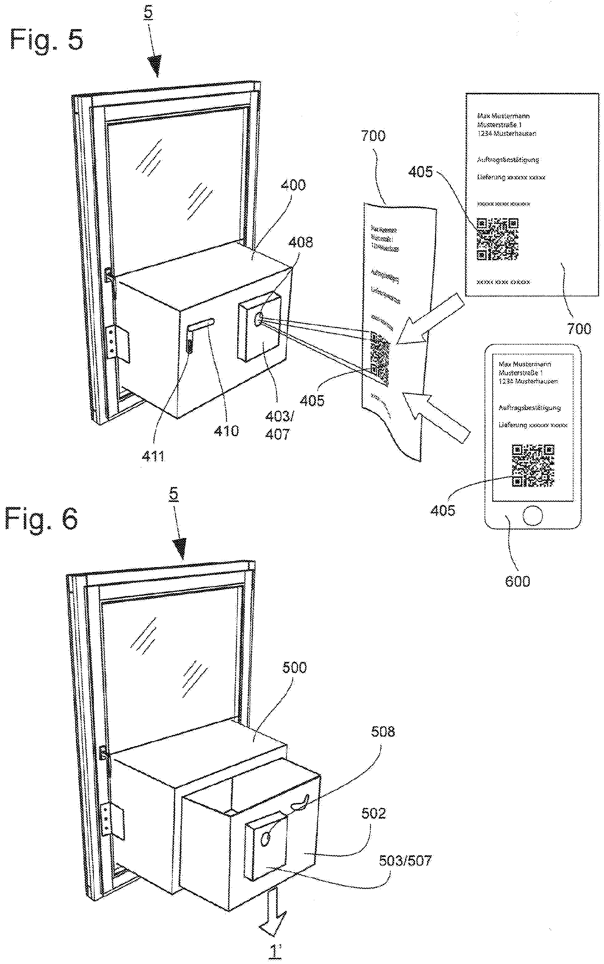

In **Figur 5** ist eine weitere alternative Empfangsvorrichtung 400 dargestellt. Diese ist anstelle auf einer Balkonbrüstung montiert zu werden, wie eine Kleinklimaanlage in ein gattungsgemäßes Fenster 5 integriert. Zur Skizzierung, wie die Empfangsstation 400 Autorisierungsinformationen, kryptografische Schlüssel und gegebenenfalls Lieferinformationen erhält, ist dargestellt, wie eine Rechnung oder eine ausgedrckte Auftragsbestätigung 700 einen optischen, maschinenlesbaren Code 405 aufweist. In diesem Code 405 ist enthalten: einen zum Zweck der Übergabe des Päckchens 1 oder eines Paktes durch die Drohne 100 an die Empfangsvorrichtung 400 öffentlichen, kryptografischen ersten Schlüssel zur Verschlüsselung eines nutzerindividuellen Identifikationscodes, des Weiteren einen nutzerindividuellen Identifikationscode für die Auslieferung, und einen zum Zweck der Übergabe des Päckchens 1 oder eines Paktes durch die Drohne 100 an die Empfangsvorrichtung 400 privaten, kryptografischen zweiten Schlüssel zur Entschlüsselung von Anmeldeinformationen der Drohne 100 während der Auslieferung. Anstelle einer ausgedruckten Auftragsbestätigung ist es auch möglich, die Informationen als Code 405 über ein zum Zeitpunkt dieser Anmeldung aktuelles Verfahren zu übermitteln, das wie Tickets für eine Flugreise oder für ein Konzert auf ein Mobiltelefon 600 übermittelt wird. Durch diese Informationen im Code 405 kann die wechselseitige Autorisierung bei der Auslieferung eines Päckchens 1 erfolgen. Dieses Verfahren zur wechselseitigen Autorisierung zwischen Empfangsstation 400 und einer Drohne 100 bei der Auslieferung läuft wie folgt ab: In einem ersten Schritt erfolgt ein Aussenden des nutzerindividuellen Identifikationscodes und eines weiteren einmaligen Codes, der mit einem zum privaten, kryptografischen zweiten Schlüssel korrespondierenden öffentlichen Schlüssel verschlüsselt worden ist, durch die Drohne 100. Dieses ausgesendete Signal kann von jeder Empfangsstation in der Nähe empfangen werden, jedoch nur von der zuvor präparierten Empfangsstation 400 entschlüsselt werden. Es erfolgt durch die präparierte Empfangsstation 400 ein Empfangen des verschlüsselten nutzerindividuellen Identifikationscodes und des weiteren einmaligen Codes. Diese führt sodann ein Entschlüsseln des verschlüsselten nutzerindividuellen Identifikationscodes aus mit dem privaten, kryptografischen zweiten Schlüssel. Danach erfolgt ein Aussenden des nutzerindividuellen Identifikationscodes und des weiteren einmaligen Codes, der mit dem öffentlichen, kryptografischen ersten Schlüssel verschlüsselt ist, durch die Empfangsstation 400, wenn der von der Empfangsstation 400 empfangene nutzerindividuellen Identifikationscodes mit dem nutzerindividuellen Code übereinstimmt, der zuvor ausgetauscht wurde. Dabei erfolgt das Aussenden des Codes durch die Empfangsstation 400 in bevorzugter Weise durch eine im Infrarotbereich leuchtenden Leuchtdiode 404.

Die Empfangsvorrichtung 400 in Figur 5 ist hier wie ein rückseitig zu öffnender Briefkasten aufgebaut, wobei eine Klinke 410 und ein Schloss 411 vorliegen, um die Empfangsstation 400 zu öffnen. Aus der geöffneten Empfangsstation 400 kann sodann das hier nicht dargestellte Päckchen 1 entnommen werden. Auch diese Empfangsstation 400 weist einen Rechner 403 auf sowie eine Vorrichtung 407 zum Empfangen von drahtlos übermittelten Signalen und eine Vorrichtung 408 zum drahtgebundenen, optischen oder drahtlosen Empfang von Autorisierungsinformationen.

In **Figur 6** ist eine weitere alternative Empfangsvorrichtung 500 dargestellt, die der Empfangsvorrichtung 400 in Figur 5 stark ähnelt, jedoch eine Schublade 502 aufweist, mit der ein hier nicht dargestelltes Päckchen 1 nach hinten in die Wohnung geschleust werden kann. Im bevorzugten Fall liegt in der Wohnung unter der Empfangsstation 500 ein Kissen oder eine weiche Unterlage, auf die ein empfangenes Päckchen 1 abgeworfen werden kann. Die Schublade 502 hat den Vorteil, dass eine Mehrzahl von Päckchen 1 in kurzer Zeit hintereinander empfangen werden können. Auch diese Empfangsstation weist einen Rechner 503 auf sowie eine Vorrichtung 507 zum Empfangen von drahtlos übermittelten Signalen und eine Vorrichtung 508 zum drahtgebundenen, optischen oder drahtlosen Empfang von Autorisierungsinformationen.

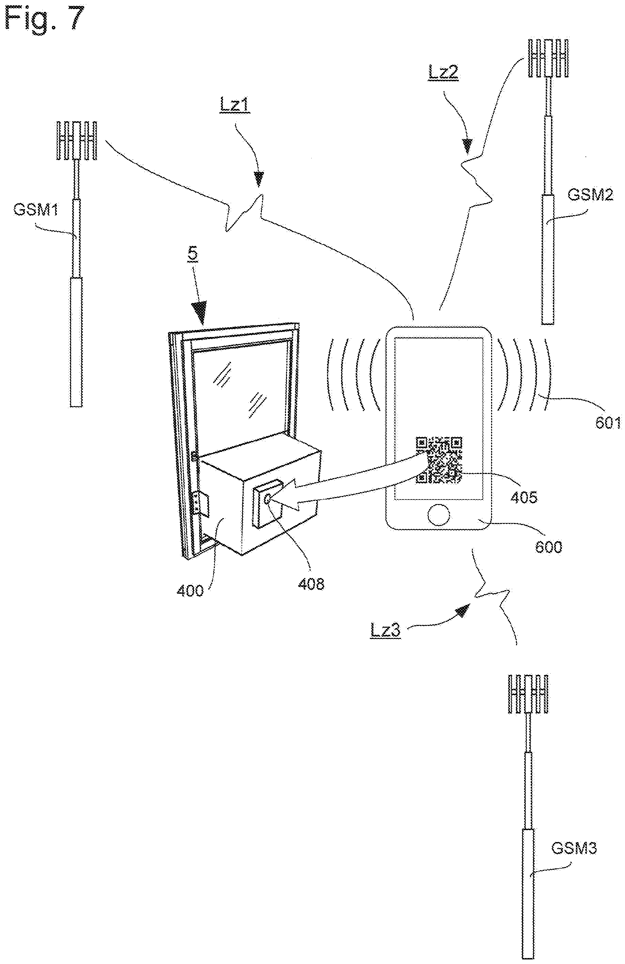

In **Figur 7** ist schließlich eine Skizze zur Erstinitialisierung einer Empfangsstation 400 dargestellt. Da die exakten Geokoordinaten einer Empfangsstation 400 bei deren Ersteinrichtung nicht bekannt sind, und es auch nicht notwendig ist, die entsprechende Elektronik zur Navigation in der Empfangsstation 400 vorzuhalten, kann die Erstinitialisierung und damit die Bekanntmachung der Empfangsstation 400 an einen Auslieferungsdienstleister wie folgt geschehen: Zuerst geschieht ein Registrieren eines Nutzers einer zu initialisierenden Empfangsstation 400 bei einem Auslieferungsdienstleister. Dies kann über das Internet, über das Telefon, mündlich in einer Geschäftsniederlassung oder schriftlich erfolgen. Sodann erfolgt ein Mitteilen eines nutzerindividuellen Codes bei Registrierung durch den Auslieferungsdienstleister an den Nutzer. Der nutzerindividuelle Code kann als optischer, maschinenlesbarer Code übergeben werden, in Form eines elektronischen Codes oder durch eine Ziffernfolge, die schriftlich oder mündlich durch den Auslieferungsdienstleister mitgeteilt wird. Unmittelbar vor dem Erstinitialisieren erfolgt ein Anrufen einer vorbestimmten Telefonnummer des Auslieferungsdienstleisters mit einem Mobiltelefon 600 durch den Nutzer, wobei sich das Mobiltelefon 600 unmittelbar am Ort der Empfangsvorrichtung 400 befindet. Ist eine Verbindung hergestellt, so erfolgt eine Eingabe des nutzerindividuellen Codes mit der Tastatur des Mobiltelefons durch den Nutzer, wobei der Auslieferungsdienstleister nach Identifikation des nutzerindividuellen Codes eine Ortung des anrufenden Endgeräts, hier des Mobiltelefons 600, bevorzugt durch die sog. Enhanced Observed Time Difference-Methode (EOTD) der GSM-Ortung vornimmt. Dabei sendet das Mobiltelefon 600 Signale 601 aus, deren Laufzeitdifferenzen Lz1, Lz2 und Lz3 gemessen werden. Diese Art der Ortung, bei der die Laufzeitdifferenzen von Funksignalen an verschiedene Sendemasten eines GSM-Netzes zur Ortung ausgewertet werden, ist durch die Skizze mit den Laufzeitdifferenzen Lz1, Lz2 und Lz 3 zu den Masten GSM1, GSM2 und GSM3 dargestellt. Es ist auch möglich, eine GPS-Ortung vorzunehmen oder eine kombinierte Ortung aus GPS und WLAN. Bei der WLAN-Ortung werden bekannte WLAN-Netze, deren exakte Geokoordinaten bekannt sind, als Ortungshilfe verwendet. Als Alternative zum Anrufen bietet sich auch ein Aufrufen einer Internet-URL mit dem nutzerindividuellen Code als Bestandteil der URL an. In diesem Fall muss aber gesichert sein, dass das Gerät, das die URL aufruft, zum Einen unmittelbar am Ort der Empfangsstation angeordnet ist und dazu in der Lage ist, Geoinformationen auf Anfrage automatisiert preiszugeben, wie es durch einen entsprechenden Javascript-Befehl in HTML 5 als Webseiten-Beschreibungssprache möglich ist.

**BEZUGSZEICHENLISTE**

| | | | |
|---|---|---|---|
| 1 | Päckchen | | drahtlosen Empfang von Au-torisierungsinformationen |
| 1' | Päckchen | | |
| 2 | Seil / Faden | 300 | Empfangsvorrichtung |
| 5 | Fenster | 301 | Einhausung |
| 6 | Auftragsbestätigung | 302 | Schublade |
| 100 | Drohne | 303 | Auffangsack |
| 101 | Wellensymbol | 307 | Vorrichtung zum Empfangen von drahtlos übermittelten Signalen |
| 103 | Magnet | | |
| 200 | Empfangsvorrichtung | 308 | Vorrichtung zum drahtge-bundenen, optischen oder drahtlosen Empfang von Autorisierungsinformationen |
| 201 | Einhausung | | |
| 202 | Öffnung | | |
| 203 | Rechner | | |
| 204 | Leuchtdiode | 400 | Empfangsvorrichtung |
| 204' | Signal | 403 | Rechner |
| 206 | Ring | 405 | Code |
| 207 | Vorrichtung zum Empfangen von drahtlos übermittelten Signalen | 407 | Vorrichtung zum Empfangen von drahtlos übermittelten Signalen |
| 208 | Vorrichtung zum drahtgebundenen, optischen oder | 408 | Vorrichtung zum drahtge-bundenen, optischen oder drahtlosen Empfang von Autorisierungsinformationen |
| 410 | Klinke | | drahtlosen Empfang von Au-torisierungsinformationen |
| 411 | Schloss | | |
| 450 | Code | 600 | Mobiltelefon |
| 500 | Empfangsvorrichtung | 601 | Signal |
| 502 | Schublade | 700 | Auftragsbestätigung |
| 503 | Rechner | Lz1 | Laufzeitdifferenz |
| 507 | Vorrichtung zum Empfangen von drahtlos übermittelten Signalen | Lz2 | Laufzeitdifferenz |
| | | Lz3 | Laufzeitdifferenz |
| | | GSM1 | GSM-Mast |
| 508 | Vorrichtung zum drahtgebundenen, optischen oder | GSM2 | GSM-Mast |
| | | GSM3 | GSM-Mast |

## Patentansprüche

1. Empfangsvorrichtung (200, 300, 400, 500) für Päckchen (1) oder Pakete, die über den Luftweg ausgeliefert werden, aufweisend
- eine vor Witterung schützende Einhausung (201, 301), welche eine Öffnung (202) zum Einlegen eines Päckchens (1) oder eines Pakets aufweist,
- eine optische Signalvorrichtung (204), die bevorzugt im Infrarotbereich Signale (204') aussendet, und in der Einhausung (201) vor Witterung geschützt angeordnet ist und beim Aussenden von Signalen die Öffnung (202) beleuchtet,
- eine Vorrichtung (207) zum Empfangen von drahtlos übermittelten Signalen,
- eine Vorrichtung (208) zum drahtgebundenen, optischen oder drahtlosen Empfang von Autorisierungsinformationen, wie kryptografischen Schlüsseln und von Lieferinformationen,
wobei
- bei einem. Anflug durch eine Drohne (100), diese ein Signal aussendet, über das sich die Drohne (100) zu erkennen gibt und
- die Vorrichtung (207) zum Empfangen von drahtlos übermittelten Signalen dieses Signal der Drohne empfängt, darauf die
- optische Signalvorrichtung (204) ein zuvor durch die Vorrichtung (208) zum drahtgebundenen, optischen oder drahtlosen Empfang von Autorisierungsinformationen vereinbartes codiertes Signal (204') aussendet, mit dem sich Empfangsvorrichtung (200, 300, 400, 500) gegenüber der Drohne (100) bemerkbar macht, indem die optische Signalvorrichtung (204) beim Aussenden von Signalen (204') die Öffnung (202) mit dem Signal beleuchtet,
**dadurch gekennzeichnet, dass**
- die Öffnung (202) von einem mattierten, optisch transparenten Ring (206) umgeben ist, der das Licht der optischen Signalvorrichtung (204) streut.

2. Empfangsvorrichtung nach Anspruch 1,
**dadurch gekennzeichnet, dass**
die Vorrichtung (208) zum drahtgebundenen, optischen oder drahtlosen Empfang von Autorisierungsinformationen eine Vorrichtung zum Lesen optischer Codes ist, wie Barcodes, QR-Codes^{®} oder dazu vergleichbare maschinenlesbare Codes.

3. Empfangsvorrichtung nach einem der Ansprüche 1 oder 2,
**dadurch gekennzeichnet, dass**
die vor Witterung schützende Einhausung (301) rückseitig mit einem Auffangsack (303) oder mit einer Auffangvorrichtung für eine Mehrzahl von Päckchen oder Paketen verbunden ist.

4. Empfangsvorrichtung nach einem der Ansprüche 1 oder 2,
**dadurch gekennzeichnet, dass**
die vor Witterung schützende Einhausung (301) eine verfahrbare Schublade (302) aufweist.

5. Empfangsvorrichtung nach einem der Ansprüche 1 bis 4,
**dadurch gekennzeichnet, dass**
diese in ein Fenster (5) integrierbar ausgestaltet ist oder eine Vorrichtung zur Befestigung an einer Balkonbrüstung aufweist.

6. Verfahren zur Erstbestimmung der Geokoordinaten einer Empfangsvorrichtung nach den Ansprüchen 1 bis 5,
**gekennzeichnet durch**
- Registrieren eines Nutzers bei einem Auslieferungsdienstleister,
- Mitteilen eines nutzerindividuellen Codes bei Registrierung durch den Auslieferungsdienstleister an den Nutzer,
- Anrufen einer vorbestimmten Telefonnummer des Auslieferungsdienstleisters mit einem Mobiltelefon durch den Nutzer, wobei sich das Mobiltelefon unmittelbar am Ort der Empfangsvorrichtung befindet,
- Eingabe des nutzerindividuellen Codes mit der Tastatur des Mobiltelefons durch den Nutzer, wobei der Auslieferungsdienstleister nach Identifikation des nutzerindividuellen Codes eine Ortung des anrufenden Endgeräts, bevorzugt durch die Enhanced Observed Time Difference-Methode (EOTD) der GSM-Ortung, gegebenenfalls unter Zuhilfenahme von WLAN-Daten, aus denen weitere Geokoordinaten ableitbar sind, vornimmt.

7. Verfahren zur Erstbestimmung der Geokoordinaten einer Empfangsvorrichtung nach den Ansprüchen 1 bis 5,
**gekennzeichnet durch**
- Registrieren eines Nutzers bei einem Auslieferungsdienstleister,
- Bereitstellen eines Links (URL) an den Nutzer,
- Aktivieren des Links durch den Nutzer mit einem Mobiltelefon wobei sich das Mobiltelefon unmittelbar am Ort der Empfangsvorrichtung befindet,
- Anfordern von Ortungsinformationen durch den Auslieferungsdienstleister.

8. Verfahren zur wechselseitigen Autorisierung zur Auslieferung eines Päckchens oder eines Paketes (1) durch eine Drohne (100) an eine automatisierte Empfangsvorrichtung (200, 300, 400, 500), aufweisend die folgenden Schritte
- Mitteilen eines maschinenlesbaren und ausdruckbaren Codes (405) durch den Betreiber der Drohne (100) an den Empfänger bei einem Bestellvorgang, der eine Auslieferung eines Päckchens oder eines Paketes (1) auslöst,
wobei der maschinenlesbare und ausdruckbare Code (405) folgende Informationen enthält:
- einen zum Zweck der Übergabe des Päckchens oder eines Paketes (1) durch die Drohne (100) an die Empfangsvorrichtung (200, 300, 400, 500) öffentlichen, kryptografischen ersten Schlüssel zur Verschlüsselung eines nutzerindividuellen Identifikationscodes,
- einen nutzerindividuellen Identifikationscode für die Auslieferung,
- einen zum Zweck der Übergabe des Päckchens oder eines Paketes (1) durch die Drohne (100) an die Empfangsvorrichtung (200, 300, 400, 500) privaten, kryptografischen zweiten Schlüssel zur Entschlüsselung von Anmeldeinformationen der Drohne (100) während der Auslieferung,
- Aussenden des nutzerindividuellen Identifikationscodes und eines weiteren einmaligen Codes, der mit einem zum privaten, kryptografischen zweiten Schlüssel korrespondierenden öffentlichen Schlüssel verschlüsselt worden ist, durch die Drohne (100),
- Empfangen des verschlüsselten nutzerindividuellen Identifikationscodes weiteren einmaligen Codes durch die Empfangsvorrichtung (200, 300, 400, 500),
- Entschlüsseln des verschlüsselten nutzerindividuellen Identifikationscodes mit dem privaten, kryptografischen zweiten Schlüssel durch die Empfangsvorrichtung (200, 300, 400, 500),
- Aussenden des nutzerindividuellen Identifikationscodes und des weiteren einmaligen Codes, der mit dem öffentlichen, kryptografischen ersten Schlüssel verschlüsselt ist, wenn empfangene nutzerindividuellen Identifikationscodes mit dem nutzerindividuellen Code (405) übereinstimmt, der zuvor ausgetauscht wurde,
**gekennzeichnet durch**
- Ausdrucken des maschinenlesbaren und ausdruckbaren Codes (405) durch einen Nutzer der Empfangsvorrichtung (200, 300, 400, 500),
- Lesen des maschinenlesbaren und ausdruckbaren Codes (405) durch die Empfangsvorrichtung (200, 300, 400, 500).

## Claims

1. A receiving device (200, 300, 400, 500) for parcels (1) or packages that are delivered by air, comprising
- a weatherproof housing (201, 301) having an opening (202) for inserting a parcel (1) or a package,
- an optical signal device (204) which preferably emits signals (204') in the infrared range and is protected from the weather in the housing (201) and illuminates the opening (202) when emitting signals,
- a device (207) for receiving wirelessly transmitted signals,
- a device (208) for wired, optical or wireless reception of authorization information, such as cryptographic keys and delivery information,
wherein
- when a drone (100) is approaching, it emits a signal by which said drone (100) identifies itself and
- the device (207) for receiving wirelessly transmitted signals receives this signal from the drone, after which the
- optical signal device (204) emits a coded signal (204') previously agreed by the device (208) for the wired, optical or wireless reception of authorization information, with which the receiving device (200, 300, 400, 500) makes itself noticeable to the drone (100), in that the optical signal device (204) illuminates the opening (202) with the signal when emitting signals (204'),
***characterized in that***
- the opening (202) is surrounded by a frosted, optically transparent ring (206) which diffuses the light of the optical signal device (204).

2. The receiving device according to Claim 1,
***characterized in that***
the device (208) for the wired, optical or wireless reception of authorization information is a device for reading optical codes, such as bar codes, QR codes^{®} or comparable machine-readable codes.

3. The receiving device according to one of Claims 1 or 2,
***characterized in that***
the weatherproof housing (301) is connected at the back to a collecting bag (303) or to a collecting device for a plurality of parcels or packages.

4. The receiving device according to one of Claims 1 or 2,
***characterized in that***
the weatherproof housing (301) has a movable drawer (302).

5. The receiving device according to one of Claims 1 to 4,
***characterized in that***
it is designed such that it can be integrated into a window (5) or has a device for fastening to a balcony railing.

6. A method for the first determination of the geo-coordinates of a receiving device according to Claims 1 to 5,
***characterized by***
- registering a user with a delivery service provider,
- communicating a user-specific code to the user upon registration by the delivery service provider,
- calling a predetermined telephone number belonging to the delivery service provider by the user on a mobile phone, the mobile phone being located right at the location of the receiving device,
- entry by the user of the user-specific code on the keypad of the mobile phone, wherein following identification of the user-specific code the delivery service provider locates the terminal from which the call is being made, preferably using the Enhanced Observed Time Difference method (EOTD) of GSM location, possibly with the aid of WLAN data, from which further geo-coordinates can be derived.

7. The method for the first determination of the geo-coordinates of a receiving device according to Claims 1 to 5,
***characterized by***
- registering a user with a delivery service provider,
- providing the user with a link (URL),
- the user activating the link using a mobile phone, wherein the mobile phone is located right at the location of the receiving device,
- requesting of location information by the delivery service provider.

8. A method for reciprocal authorization for delivery of a parcel or a package (1) by a drone (100) to an automated receiving device (200, 300, 400, 500), comprising the following steps
- communicating of a machine-readable and printable code (405) by the operator of the drone (100) to the recipient during an ordering process that triggers delivery of a parcel or package (1),
wherein the machine-readable and printable code (405) contains the following information:
- a cryptographic first key for encrypting a user-specific identification code that is public for the purpose of delivery of the parcel or package (1) by the drone (100) to the receiving device (200, 300, 400, 500),
- a user-specific identification code for delivery,
- a cryptographic second key for the decryption of registration information of the drone (100) during delivery which is private for the purpose of delivery of the parcel or a package (1) by the drone (100) to the receiving device (200, 300, 400, 500),
- sending of the user-specific identification code and a further unique code, which has been encrypted with a public key corresponding to the private cryptographic second key, by the drone (100),
- receiving of the encrypted user-specific identification code of further unique codes by the receiving device (200, 300, 400, 500),
- decryption of the encrypted user-specific identification code with the private, cryptographic second key by the receiving device (200, 300, 400, 500),
- sending out of the user-specific identification code and the further unique code encrypted with the public, cryptographic first key, when the received user-specific identification code matches the user-specific code (405) previously exchanged
***characterized by***
- printing out of the machine-readable and printable code (405) by a user of the receiving device (200, 300, 400, 500),
- reading of the machine-readable and printable code (405) by the receiving device (200, 300, 400, 500).

## Revendications

1. Dispositif de réception (200, 300, 400, 500) de petits colis (1) ou de colis, qui sont livrés par voie aérienne, comportant
- une enceinte (201, 301) protectrice contre les intempéries, laquelle comporte une ouverture (202) destinée à y insérer un petit colis (1) ou un colis,
- un dispositif (204) de signalisation optique, qui émet des signaux (204'), de préférence dans le spectre infrarouge, et qui est placé dans l'enceinte (201), à l'abri des intempéries et qui lors de l'émission de signaux éclaire l'ouverture (202),
- un dispositif (207), destiné à la réception de signaux transmis sans fil,
- un dispositif (208), destiné à la réception filaire optique ou à la réception sans fil d'informations d'autorisation, telles que des clés cryptographiques et des informations de livraison,
- lors d'une approche aérienne d'un drone (100), celui-ci émettant un signal, par l'intermédiaire duquel le drone (100) se fait identifier et
- le dispositif (207) destiné à réceptionner des signaux transmis sans fil réceptionnant ledit signal de drone, suite à quoi
- le dispositif (204) de signalisation optique émet un signal (204') codé, préalablement convenu par le dispositif (208) destiné à la réception filaire optique ou à la réception sans fil d'informations d'autorisation, à l'aide duquel le dispositif de réception (200, 300, 400, 500) se fait remarquer par le drone (100), en ce que lors de l'émission de signaux (204'), le dispositif (204) de signalisation optique éclaire l'ouverture (202) avec le signal,
***caractérisé en ce que***
- l'ouverture (202) est entourée d'un anneau (206) dépoli, optiquement transparent, qui dissémine la lumière du dispositif (204) de signalisation optique.

2. Dispositif de réception selon la revendication 1,
***caractérisé en ce que***
le dispositif (208) destiné à la réception filaire optique ou à la réception sans fil d'informations d'autorisation est un dispositif de lecture de codes optiques, tels que des codes-barres, des QR-codes^{®} ou des codes comparables à ceux-ci, lisibles par machine.

3. Dispositif de réception selon l'une quelconque des revendications 1 ou 2,
***caractérisé en ce que***
l'enceinte (301) protectrice contre les intempéries est assemblée sur sa face arrière avec un sac collecteur (303) ou avec un dispositif collecteur d'une multiplicité de petits colis ou de paquets.

4. Dispositif de réception selon l'une quelconque des revendications 1 ou 2,
***caractérisé en ce que***
l'enceinte (301) protectrice contre les intempéries comporte un tiroir (302) déplaçable.

5. Dispositif de réception selon l'une quelconque des revendications 1 à 4,
***caractérisé en ce que***
celui-ci est conçu pour être intégrable dans une fenêtre (5) ou comporte un dispositif destiné à la fixation sur une balustrade de balcon.

6. Procédé, destiné à la détermination première des coordonnées géographiques d'un dispositif de réception selon les revendications 1 à 5,
***caractérisé par***
- l'enregistrement d'un utilisateur chez un prestataire de livraisons,
- la communication à l'utilisateur d'un code dédié à l'utilisateur lors de son enregistrement par le prestataire de livraisons,
- l'appel par l'utilisateur d'un numéro de téléphone prédéfini à l'aide d'un téléphone mobile, le téléphone mobile se trouvant directement au lieu du dispositif de réception,
- la saisie par l'utilisateur sur le clavier du téléphone d'un code dédié à l'utilisateur, après l'identification du code dédié à l'utilisateur, le prestataire de livraisons procédant à une localisation du terminal appelant, de préférence via la méthode de différence de temps améliorée (E-OTD) de la localisation GSM, en s'aidant le cas échéant de données WLAN permettant de déduire des coordonnées géographiques supplémentaires.

7. Procédé, destiné à la détermination première des coordonnées géographiques d'un dispositif de réception selon l'une quelconque des revendications 1 à 5,
***caractérisé par***
- l'enregistrement d'un utilisateur auprès d'un prestataire de livraisons,
- la mise à disposition d'un lien (URL) à l'attention de l'utilisateur,
- l'activation du lien par l'utilisateur, à l'aide d'un téléphone mobile, le téléphone mobile se trouvant directement au lieu du dispositif de réception,
- la demande d'informations de localisation par le prestataire de livraisons.

8. Procédé, destiné à l'autorisation mutuelle pour la livraison d'un petit colis ou d'un colis (1) par un drone (100) à un dispositif de réception (200, 300, 400, 500) automatisé, comportant les étapes suivantes :
- la communication par l'exploitant du drone (100) au destinataire d'un code (405) lisible par machine et imprimable, lors d'un processus de commande, qui déclenche une livraison d'un petit colis ou d'un colis (1),
le code (405) lisible par machine et imprimable contenant les informations suivantes :
- une première clé cryptographique publique, aux fins de la transmission au dispositif de réception (200,300, 400, 500) du petit colis ou d'un colis (1) par le drone (100), destiné à crypter un premier code d'identification dédié à l'utilisateur,
- un code d'identification dédié à l'utilisateur pour la réception du colis,
- une deuxième clé cryptographique privée, aux fins de la transmission au dispositif de réception (200,300, 400, 500) du petit colis ou d'un colis (1) par le drone (100), destiné à décrypter des informations d'arrivée du drone (100) pendant la livraison,
- l'émission par le drone (100) du code d'identification dédié à l'utilisateur et d'un autre code unique qui a été crypté avec une clé publique correspondant à une deuxième clé cryptographique privée,
- la réception par le dispositif de réception (200, 300, 400, 500) du code d'identification crypté, dédié à l'utilisateur et de l'autre code unique,
- le décryptage par le dispositif de réception (200, 300, 400, 500) du code d'identification crypté, dédié à l'utilisateur à l'aide de la deuxième clé cryptographique privée,
- l'émission du code d'identification dédié à l'utilisateur et de l'autre code unique qui est crypté avec la première clé cryptographique publique, si le code d'dentification dédié à l'utilisateur qui a été réceptionné correspond au code (405) dédié à l'utilisateur qui a été préalablement échangé,
***caractérisé par***
- l'impression par un utilisateur du dispositif de réception (200, 300, 400, 500) du code (405) lisible par machine et imprimable,
- la lecture par le dispositif de réception (200, 300, 400, 500) du code (405) lisible par machine et imprimable.
